# EUROPEAN PATENT SPECIFICATION

(11) **EP 4 283 172 B1**
(45) Date of publication and mention of the grant of the patent: **07.05.2025**
(21) Application number: 23174888.0
(22) Date of filing: 23.05.2023
(51) Int. Cl.: F16K 31/53, F16K 31/05, F16K 31/04

(54) **VALVE ACTUATOR**
VENTILAKTUATOR
ACTIONNEUR DE SOUPAPE

(30) Priority: 26.05.2022 KR 20220064877
(43) Date of publication of application: 29.11.2023
(73) Proprietor: LG Electronics Inc., Yeongdeungpo-gu Seoul 07336 (KR)
(72) Inventor: KANG, Joohang, 08592 Seoul (KR); AHN, Youngchan, 08592 Seoul (KR)
(74) Representative: Vossius & Partner Patentanwälte Rechtsanwälte mbB

(56) References cited:
- JP-A- 2002 188 692
- JP-A- 2011 220 461
- US-A- 4 647 007
- US-A1- 2019 120 330

## Description

### BACKGROUND OF THE INVENTION

### Field of the Invention

The present disclosure relates to a valve actuator for opening and closing a refrigerant, and more particularly, to a valve actuator having a gear assembly having a novel structure.

### Description of the Related Art

Refrigerants are essential for air conditioners, which are one of the air conditioning systems, and the first to third generation refrigerants that have been used previously have very high ozone layer depletion potential (ODP) and/or global warming potential (GWP).

Therefore, in recent years, fourth-generation refrigerants with low ozone depletion potential and/or global warming potential have been developed, and newly developed fourth-generation refrigerants, for example, hydrogen fluoroolefin (HFO)-based refrigerants, are more expensive than conventional refrigerants and are flammable, resulting in a risk of fire and/or explosion.

Therefore, the air conditioning system is provided with a ball valve for blocking refrigerant leakage.

The ball valve provided in an air conditioning system to block refrigerant leakage includes a ball in which a flow path is formed, a pipe into which the ball is inserted, a tap part provided in the pipe, and a stem installed in the tap part.

The ball valve of this configuration can open and close the refrigerant by rotating the stem, and the air conditioning system used for industrial purposes is provided with a valve actuator that is operated by an electrical signal input from the outside to block and operate the ball valve.

The valve actuator may not have a separate manual rotation mode or may have a manual rotation mode by applying a motor capable of reverse rotation.

One example of a valve actuator having a manual rotation mode is disclosed in US Publication No. US 2001/0035510 A1.

The valve actuator of this document has a clutch unit used in the manual rotation mode installed on the output shaft of the gear assembly.

That is, in the valve actuator of the above document, the gear train is disengaged when the output shaft (valve rotation shaft) is pressed in the axial direction, and after rotating the valve in this state, if the pressing of the output shaft is disengaged, the position of the output shaft returns to its original position by the return spring.

Therefore, the valve actuator of the above document has a problem in that sealing performance is deteriorated because the output shaft moves in two directions, i.e., a rotational direction and an axial direction (a vertical direction), and there is a problem in that the size of the product increases because the output shaft must move in the axial direction in the manual rotation mode.

In addition, a strong and large return spring is required to return the output shaft to its original position, and since the engagement between gear teeth is directly disengaged in the manual rotation mode, there is a problem that the gear teeth are adversely affected.

### [Prior art documents]

US Publication No. US 2001/0035510 A1. JP 2002 188692 A relates to a valve actuator for rotating a valve shaft of a valve such as a ball valve through a reduction mechanism using an electric motor as a power source. US 2019/120330 A1 discloses a further example of a valve actuator.

### SUMMARY OF THE INVENTION

The invention is defined by independent claim 1. Further embodiments of the invention are defined by the dependent claims. An object of the present disclosure is to provide a valve actuator capable of solving at least one of the above problems.

Another object of the present disclosure is to provide a valve actuator having a gear assembly having a simple structure.

Still another object of the present disclosure is to provide a valve actuator capable of implementing a manual rotation mode even with a small force.

Still another object of the present disclosure is to provide a valve actuator capable of minimizing adverse effects on gear teeth in a manual rotation mode.

Still another object of the present disclosure is to provide a valve actuator capable of returning a clutch shaft to its original position even when a return spring fails to operate.

Still another object of the present disclosure is to provide a valve actuator with improved sealing performance.

Still another object of the present disclosure is to provide a valve actuator having a reduced size.

Objects of the present disclosure are not limited to the above-mentioned objects, and other objects and advantages of the present disclosure not mentioned above can be understood by the following description and more clearly will be understood by the embodiments of the present disclosure.

It will also be readily seen that the objects and advantages of the present disclosure may be realized by the means and combinations indicated in the claims.

In a valve actuator according to an embodiment of the present disclosure, a gear assembly transmitting a driving force of a motor to a ball valve includes an input gear coupled to a rotation shaft of the motor and rotating together with the rotation shaft; an output gear positioned apart from the input gear in a horizontal direction, coupled to a stem of the ball valve, and transmitting a rotational force of the input gear to the stem; and a power transmission gear transmitting the rotational force of the input gear to the output gear.

In addition, the power transmission gear includes a first gear set positioned between the input gear and the output gear, wherein the first gear set includes a clutch shaft installed in the housing so as to be movable in a vertical direction; and a first gear and a second gear coupled to the clutch shaft and disengaged from each other or coupled to each other by vertical movement of the clutch shaft.

In addition, the power transmission gear may further include a second gear set disposed adjacent to the first gear set in the horizontal direction, and wherein the second gear set may include a third gear coupled to the first gear; and a fourth gear positioned above the third gear, integrally rotating with the third gear, and coupled with the output gear.

According to this configuration, since the middle shaft (shaft of power transmission gear) of the gear train, not the output shaft to which the output gear is coupled, is formed as the clutch shaft, the clutch shaft may be operated with a smaller force compared to the case where the output shaft is used as the clutch shaft.

Therefore, a smaller spring than a conventional return spring for returning the output shaft to its original position may be used as the return spring.

In addition, since it is possible to couple or release between the first and second gears according to the vertical movement of the clutch shaft, when the clutch shaft is operated, coupling between gears is disengaged, not disengagement of coupling between gear teeth.

Therefore, when the clutch shaft moves in the vertical direction, the influence on the teeth of the input gear, the output gear, and the power transmission gear may be minimized.

In addition, since the power transmission gear is composed of two gear sets, it is possible to simplify the configuration of the gear assembly.

A coupling part for coupling the first gear to the second gear is protruded from a lower surface of the first gear coupled to the input gear, and a coupling part insertion groove into which the coupling part of the first gear is inserted is formed on an upper surface of the second gear.

The coupling part and the coupling part insertion groove may be formed in shapes corresponding to each other, and the planar shape may be formed into an elliptical, polygonal, or splined shape.

According to this configuration, the height or thickness of the first gear set in the vertical direction may be reduced.

Accordingly, since the size of the space formed by a middle plate and a lower case can be reduced, the size of the valve actuator can be reduced.

A push-up part is formed on the clutch shaft to push the first gear upward in
contact with the coupling part of the first gear, and the push-up part is positioned in a push-up part insertion groove formed on a lower surface of the coupling part of the first gear.

According to this configuration, the height or thickness of the first gear set in the vertical direction may be reduced.

Accordingly, since the size of the space formed by the middle plate and the lower case can be reduced, the size of the valve actuator may be further reduced.

The housing may include a lower case; an upper case coupled to the lower case; and a middle plate positioned in the inner space formed by the lower case and the upper case, wherein the motor and the gear assembly may be positioned in an inner space formed by the middle plate and the lower case.

According to this configuration, since the length of the axis coupled to the rotational shaft of the motor and the gears of the gear assembly may be shortened, and the size of the space formed by the middle plate and the upper case may be greatly reduced, the size of the valve actuator may be further reduced.

The first gear may be pressed toward the second gear by a return spring disposed between the first gear and the middle plate.

According to this configuration, the first gear and the second gear are maintained in a couping state before the valve actuator operates.

When the clutch shaft is pressed upward, the first gear is pushed up by the push-up part while the return spring is pressed, and thus the coupling between the first gear and the second gear is disengaged.

After that, when the pressing of the clutch shaft is disengaged, the first gear is pressed downward by the return spring, and when the output shaft of the output gear rotates and the coupling part of the first gear is inserted into the coupling part insertion groove of the second gear, the first gear and the second gear are coupled again.

Therefore, when the clutch shaft moves in the vertical direction, the influence on the teeth of the input gear, the output gear, and the power transmission gear may be minimized.

A snap ring may be installed on the clutch shaft between the return spring and an upper surface of the first gear.

According to this configuration, when the first gear does not move downward due to a malfunction of the return spring despite disengaging the pressing of the clutch shaft, the first gear and the second gear may be coupled by pulling the clutch shaft downward.

A third seal ring may be disposed on the clutch shaft below the second gear, and a guide groove may be formed in the lower case where the clutch shaft is coupled and allow the third seal ring to move in the vertical direction together with the clutch shaft when the clutch shaft moves in the vertical direction.

According to this configuration, a movement distance of the clutch shaft in an upward direction may be set by a gap between the third seal ring and the second gear.

In addition, the seal ring and/or the lower case may support the second gear in a state in which the coupling between the gears of the first gear and the second gear is disengaged.

The power transmission gear may further include a second gear set disposed adjacent to the first gear set in the horizontal direction, and the second gear set may include a third gear coupled to the first gear; and a fourth gear positioned above the third gear, integrally rotating with the third gear, and coupled with the output gear.

The third gear and the fourth gear may be integrally formed or may be manufactured separately and coupled to each other similarly to the first and second gears.

According to this configuration, it is possible to further simplify the configuration of the gear assembly including the power transmission gear.

When the clutch shaft moves upward, an upward movement of the second gear may be inhibited by the motor and the third gear.

According to this configuration, since the inner space formed by the lower case and the middle plate can be reduced, the size of the valve actuator can be further reduced.

According to the valve actuator according to the embodiment of the present disclosure, it is possible to solve the problem of the valve assembly applicable only to specially manufactured valves having a flange shape and the problem of the valve assembly assembled to the valve by the principle of fastening the bottle cap.

In addition, the valve actuator according to the embodiment of the present disclosure can be additionally mounted and used in standard ball valves of various sizes.

In addition, the valve actuator according to the embodiment of the present disclosure can maintain a good assembly state with the ball valve.

In addition, the valve actuator according to the embodiment of the present disclosure can be smoothly engaged with the ball valve even if the starting point of the thread provided in the tap part of the ball valve is not constant.

In addition, the valve actuator according to the embodiment of the present disclosure can maintain good airtightness even in an environment with a large temperature difference or an inundation environment.

In addition, the valve actuator according to the embodiment of the present disclosure can have airtight performance of completely waterproof and dustproof (IP67).

In addition to the above effects, specific effects of the present disclosure will be described together while explaining specific details for implementing the description below.

### BRIEF DESCRIPTION OF THE DRAWINGS

FIG. 1 is a view showing a state in which a valve actuator and a ball valve are assembled according to an embodiment of the present disclosure.
FIG. 2 is an exploded perspective view of main parts of FIG. 1, as viewed from above.
FIG. 3 is an exploded perspective view of main parts of FIG. 1, as viewed from bottom.
FIG. 4 is a cross-sectional view of a flange.
FIG. 5 is a perspective view of a gear assembly in which a first gear and a second gear coupled to a clutch shaft are disassembled, as viewed from above.
FIG. 6 is a perspective view of a gear assembly in which a first gear and a second gear coupled to a clutch shaft are disassembled, as viewed from above.
FIG. 7 is a cross-sectional view showing a state in which an output shaft of a gear assembly is assembled to a housing and a flange.
FIG. 8 is a cross-sectional view showing a state in which a clutch shaft, first gear, and second gear of a gear assembly are assembled to a housing.
FIG. 9 is a cross-sectional view showing a state in which a clutch shaft of a gear assembly is pressed.
FIG. 10 is a cross-sectional view showing a state in which an adhesive is applied to a power line passage hole of a housing.

### DETAILED DESCRIPTION OF THE EMBODIMENTS

Hereinafter, the embodiments of the present disclosure will be described in detail with reference to the drawings so that those skilled in the art can easily carry out the embodiments of the present disclosure. The present disclosure may be implemented in many different forms and is not limited to the embodiments described herein.

In order to clearly describe the present disclosure, parts irrelevant to the description are omitted, and the same reference numerals are assigned to the same or similar components throughout the specification. In addition, some embodiments of the present disclosure will be described in detail with reference to exemplary drawings.

In adding reference numerals to components of each drawing, the same components may have the same numerals as much as possible even though they are displayed on different drawings. In addition, in describing the present disclosure, when it is determined that a detailed description of a related known configuration or function may obscure the gist of the present disclosure, the detailed description may be omitted.

In describing the components of the present disclosure, when a component is described as "connected", "coupled" or "contacted" to another component, the component may be directly connected or contacted to the other component, but it should be understood that other components may be "interposed" between each component, or each component may be "connected", "coupled" or "contacted" via other components.

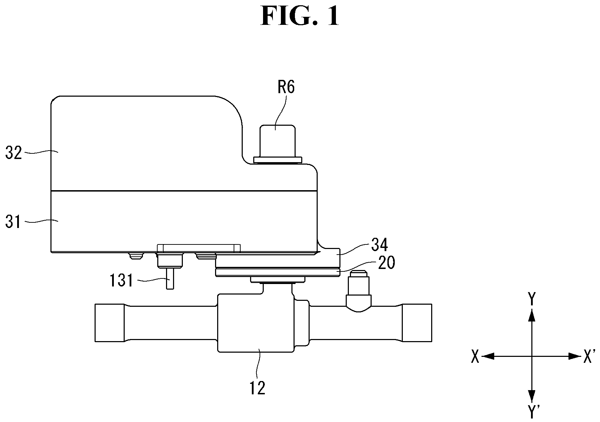

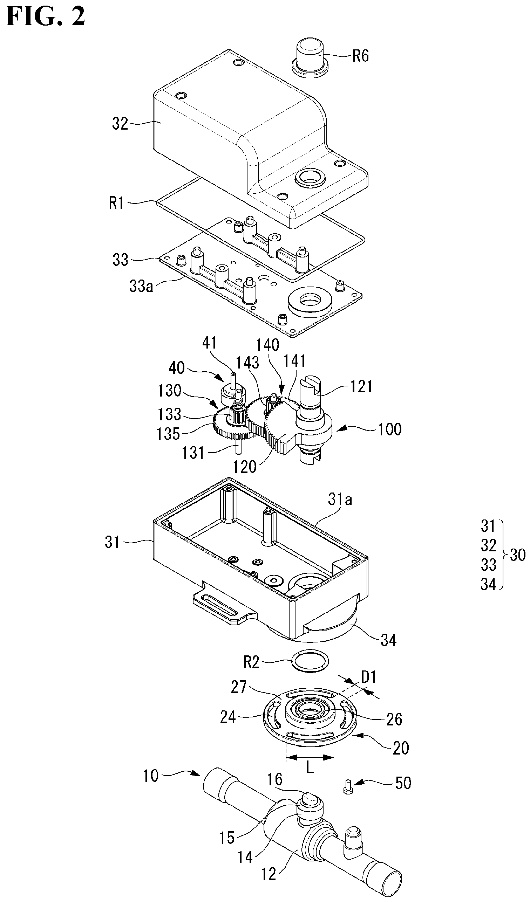

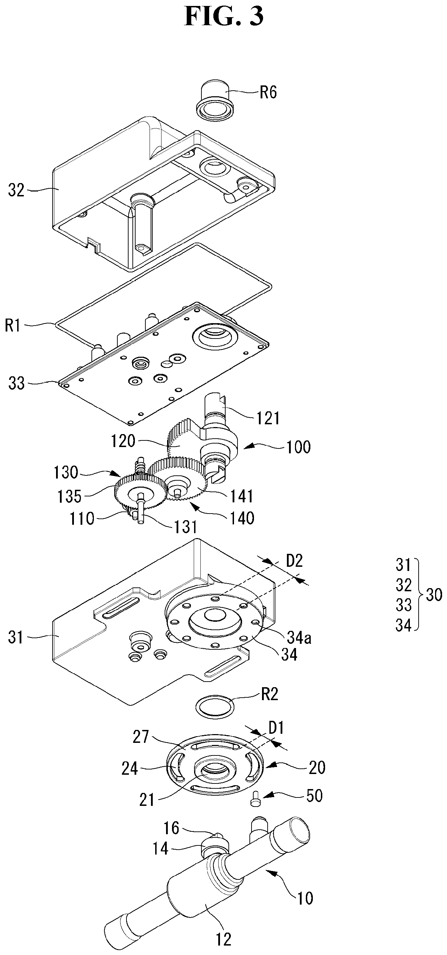

FIG. 1 is a view showing a state in which a valve actuator and a ball valve are assembled according to an embodiment of the present disclosure, FIG. 2 is an exploded perspective view of main parts of FIG. 1, as viewed from above, and FIG. 3 is an exploded perspective view of main parts of FIG. 1, as viewed from the bottom.

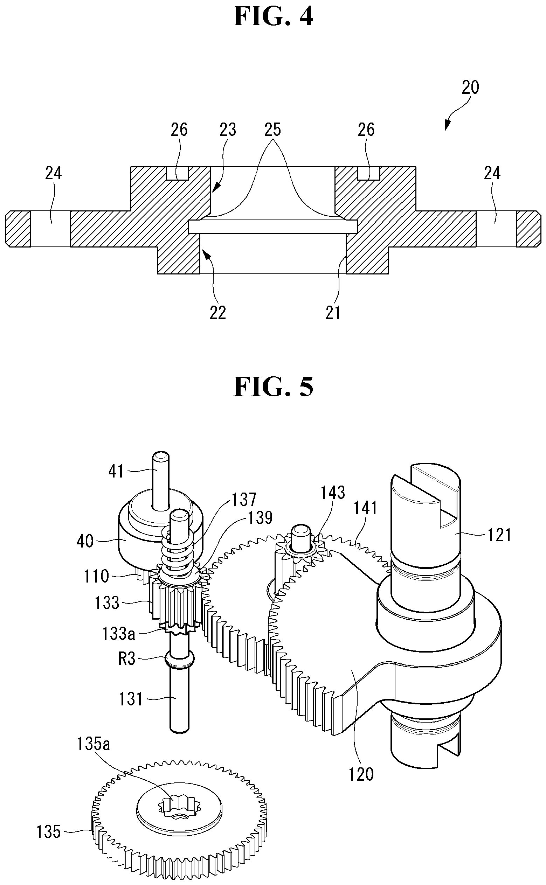

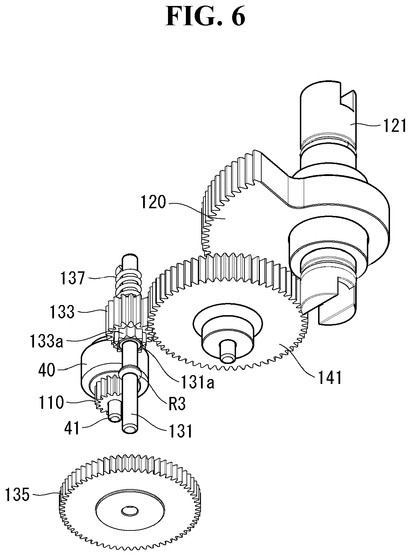

FIG. 4 is a cross-sectional view of a flange, FIG. 5 is a perspective view of a gear assembly in which a first gear and a second gear coupled to a clutch shaft are disassembled, as viewed from above, and FIG. 6 is a perspective view of a gear assembly in which a first gear and a second gear coupled to a clutch shaft are disassembled, as viewed from above.

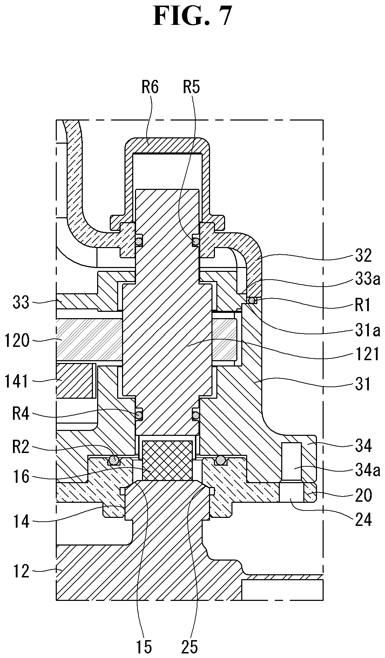

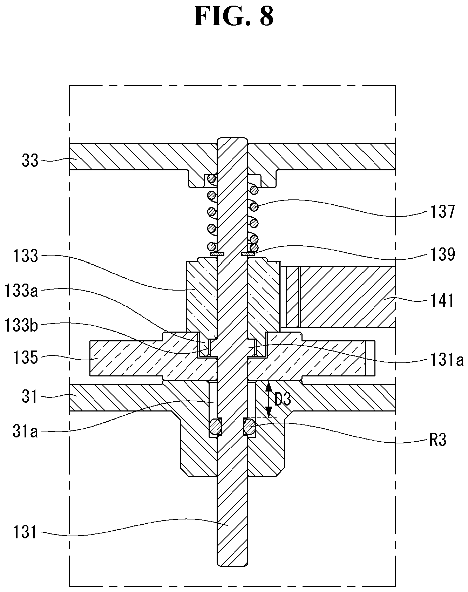

FIG. 7 is a cross-sectional view showing a state in which an output shaft of a gear assembly is assembled to a housing and a flange, and FIG. 8 is a cross-sectional view showing a state in which a clutch shaft, first gear, and second gear of a gear assembly are assembled to a housing.

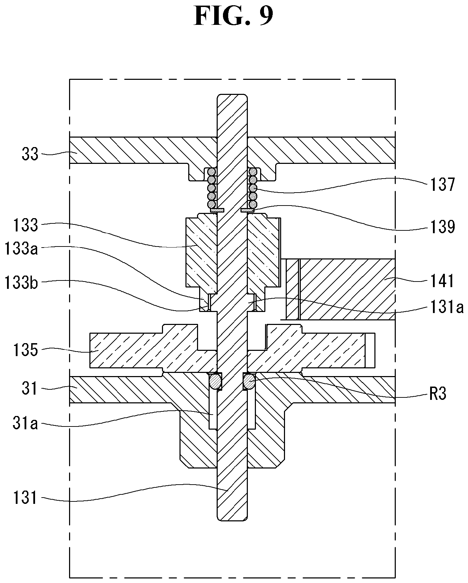

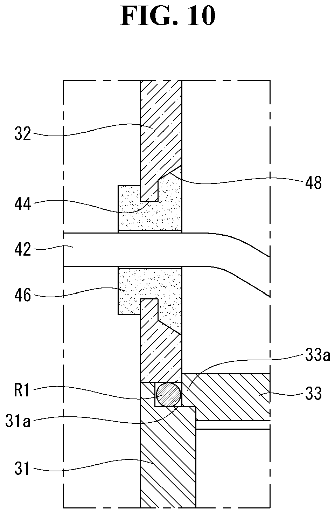

FIG. 9 is a cross-sectional view showing a state in which a clutch shaft of a gear assembly is pressed, and FIG. 10 is a cross-sectional view showing a state in which an adhesive is applied to a power line passage hole of a housing.

A ball valve 10 provided in the air conditioning system to block refrigerant leakage includes a ball in which a flow path is formed, a pipe 12 into which the ball is inserted, a tap part 14 provided in the pipe 12, and a stem 16 installed on the tap part 14.

In order to install a valve actuator on the tap part 14 of the standardized ball valve 10 of this configuration, the valve actuator of the present disclosure includes a flange 20 screwed to the tap part 14 of the ball valve 10 but coupled to a housing 30 of the valve actuator by a fastening member such as a screw or bolt.

In this way, according to the structure in which the flange 20 is provided separately from the ball valve 10 and the housing 30 and coupled to the ball valve 10 and the housing 30 by a separate fastening member or a separate fastening method, it is possible to additionally install the valve actuator to the ball valves 10 of various standards already installed in the field.

The flange 20 has a tap part insertion hole 22 in which a tap part 21 screwed with the tap part 14 of ball valve is formed on an inner surface.

In addition, a stem insertion hole 23 communicating with the tap part insertion hole 22 and into which the stem 16 of the ball valve 10 is inserted, and a plurality of long holes 24 positioned at a certain distance from the center of the tap part insertion hole 22 and formed long in the circumferential direction are further provided.

In addition, the flange 20 has a chamfer 25 formed on the inner surface of the tap part insertion hole 22.

In addition, a chamfer 15 having a shape corresponding to the chamfer 25 of the flange 20 is formed at the top of the tap part 14 of the ball valve 10.

Thus, in a state where the flange 20 is screwed to the tap part 14 of the ball valve 10, the chamfer 25 of the flange 20 is in contact with the chamfer 15 formed at the upper end of the tap part 14 of the ball valve 10.

According to this configuration, a supporting reaction force is formed by the chamfers 15 and 25 in contact with each other in a state where the flange 20 is screwed to the tap part 14 of the ball valve 10.

Therefore, even if the valve turning torque is greater than the screw fastening force between the tap part 21 of the flange 20 and the tap part 14 of the ball valve 10, loosening between the tap part 21 of the flange 20 and the tap part 14 of the ball valve 10 is suppressed, and the assembly state between the tap part 21 of the flange 20 and the tap part 14 of the ball valve 10 is maintained well.

In addition, when screwing the tap part 21 of the flange 20 to the tap part 14 of the ball valve 10, even if the starting point of the thread formed in the tap part 14 of the ball valve 10 is not constant, it is possible to smoothly screw the tap part 21 of the flange 20 to the tap part 14 of the ball valve 10.

The flange 20 further includes a ring insertion groove 26 formed on the upper surface and in which a second seal ring R2 is disposed

According to this configuration, it is possible to prevent moisture from entering the inside of the housing 30 through a minute gap formed between the flange 20 and a flange coupling part 34.

The housing 30 provides a space in which a motor 40 and a gear assembly 100 provided in the valve actuator are installed.

The housing 30 includes a lower case 31, an upper case 32 coupled to the lower case 31, an middle plate 33 positioned in an inner space formed by the lower case 31 and the upper case 32, and a flange coupling part 34 provided on the lower case 31 and coupled to the flange 20.

In this embodiment, the motor 40 and the gear assembly 100 will be described as an example of being disposed in a space formed by the middle plate 33 and the lower case 31.

However, the motor 40 may be disposed in a space formed by the middle plate 33 and the upper case 32, in this case, the arrangement of the plurality of gears provided in the gear assembly 100 may be different from the arrangement structure described in the present embodiment.

However, even if the arrangement position of the motor 40 and the gear assembly 100 and the arrangement structure of the gear assembly 100 are partially different from those of the present embodiment, it falls within the scope of the present disclosure if it includes the features of the present disclosure.

The flange coupling part 34 of the housing 30 has a plurality of circular grooves 34a into which a plurality of fastening members 50 passing through the plurality of long holes 24 are fastened, respectively.

Each of the plurality of long holes 24 communicates with at least one of the plurality of circular grooves 34a.

At this time, the number of the plurality of circular grooves 34a may be formed to be twice or more than the number of the plurality of long holes 24.

In this way, when the number of the plurality of circular grooves 34a is formed to be twice or more than the number of the plurality of long holes 24, when screwing the flange 20 to the tap part 14 of the ball valve 10, even if the starting point of the thread formed in the tap part 14 of the ball valve 10 is not constant, the flange 20 may be smoothly screwed into the tap part 14 of the ball valve 10.

However, it is also possible to form the number of the plurality of circular grooves 34a to be the same as the number of the plurality of long holes 24.

In addition, it is also possible to form the number of the plurality of circular grooves 34a to be 1.5 times or more and less than 2 times the number of the plurality of long holes 24.

According to this configuration, after screwing the tap part 21 of the flange 20 to the tap part 14 of the ball valve 10, when coupling the housing 30 to the flange 20 using the fastening member 50, even if the rotational phase of the flange 20 is different, the flange 20 can be smoothly fastened to the flange coupling part 34 of the housing 30.

Here, the rotational phase of the flange 20 may vary depending on the starting point of a thread provided in the tap part of the ball valve.

A distance D1 between the two adjacent long holes 24 is smaller than a distance D2 between the two adjacent circular grooves 34a.

In addition, a bridge 27 is positioned between the two adjacent long holes 24, and the width of the bridge 27, that is, the distance D1 between the two adjacent long holes 24 is smaller than the length L of the long holes 24.

Thus, the strength of the flange 20 is properly maintained due to the bridge 27.

The housing 30 may have a power line passage hole 44 through which an external power line 42 for supplying power to the motor 40 passes, and an adhesive 46 may be applied to the power line passage hole 44 in a state where the external power line 42 passes through.

The power line passage hole 44 may be formed in the lower case 31 or the upper case 32.

Unlike this, one power line passage hole 44 may be partially formed in each of the lower case 31 and the upper case 32, and it may be formed as a whole in a state in which the lower case 31 and the upper case 32 are coupled.

When the adhesive 46 is applied to the power line passage hole 44, it is possible to prevent moisture from entering the inside of the housing 30 through the power line passage hole 44.

In order to prevent the adhesive 46 applied to the power line passage hole 44 from being separated and/or detached from the housing 30, the inner surface of the housing 30 around the power line passage hole 44 is provided with an adhesive receiving groove 48 formed larger than the power line passage hole 44 and in which a portion of the adhesive 46 is positioned.

Therefore, it is possible to prevent the adhesive 46 applied to the power line passage hole 44 from being separated and/or detached from the power line passage hole 44.

A seating part 31a on which a protruding jaw 33a of the middle plate 33 is seated is formed at an upper end of the lower case 31 of the housing 30.

In addition, a first seal ring R1 is disposed on the seating part 31a of the lower case 31.

The first seal ring R1 is supported by a lower end of the upper case 32, the seating part 31a of the lower case 31, and the protruding jaw 33a of the middle plate 33, respectively.

According to this configuration, the first seal ring R1 is pressed in the vertical (Y-Y') direction by the upper case 32 and the lower case 31.

In addition, the first seal ring R1 is pressed in the horizontal (X-X') direction by the protruding jaw 33a of the middle plate 33 and the seating part 31a of the lower case 31, or supported in the horizontal (X-X') direction by the protruding jaw 33a of the middle plate 33 and the seating part 31a of the lower case 31.

Therefore, when the upper case 32 and the lower case 31 contract and expand due to the temperature difference during use of the valve actuator, it is possible to prevent airtightness from deteriorating due to a minute gap between the upper case 32 and the lower case 31.

The motor 40 and the gear assembly 100 are disposed in a space formed by the lower case 31 and the middle plate 33 in the inner space of the housing 30.

However, the motor 40 may be disposed in a space formed by the middle plate 33 and the upper case 32, in this case, the arrangement of the plurality of gears provided in the gear assembly 100 may be different from the arrangement structure described in the present embodiment.

However, even if the arrangement position of the motor 40 and the gear assembly 100 and the arrangement structure of the gear assembly 100 are partially different from those of the present embodiment, it falls within the scope of the present disclosure if it includes the features of the present disclosure.

When the motor 40 and the gear assembly 100 are disposed in the space formed by the lower case 31 and the middle plate 33 in the inner space of the housing 30, the length of the rotation shaft of the motor 40 and the shaft coupled to the gears of the gear assembly 100 may be formed short, and the size of the space formed by the middle plate 33 and the upper case 32 may be reduced. Accordingly, the size of the valve actuator may be reduced.

The motor 40 may be a type of motor with precise rotational control. However, this is not essential and may be a type of motor with imprecise rotational control. Also, the motor 40 may be a normal/reverse rotation motor.

The gear assembly 100 includes an input gear 110 coupled to a rotation shaft 41 of the motor 40 and rotating together with the rotation shaft 41, and an output gear 120 positioned apart from the input gear 110 in the horizontal (X-X') direction

The gear assembly 100 further includes power transmission gears 130 and 140 that transmit the rotational force of the input gear 110 to the output gear 120.

The output gear 120 is coupled to the stem 16 of the ball valve 10 and transmits the rotational force of the input gear 110 to the stem 16 of the ball valve 10.

In the present disclosure, the power transmission gear includes a first gear set 130 and a second gear set 140 disposed adjacent to the first gear set 130 in the horizontal (X-X ') direction.

The first gear set 130 includes a clutch shaft 131 having both ends coupled to the middle plate 33 and the lower case 31 so as to be movable in the vertical (Y-Y') direction.

In addition, the first gear set 130 further includes a first gear 133 and a second gear 135 that are coupled to the clutch shaft 131 and disengaged from each other or coupled to each other by the movement of the clutch shaft 131 in the vertical (Y-Y') direction.

The clutch shaft 131 and the first gear set 130 constitute a clutch unit in the valve actuator of the present disclosure.

If the clutch unit is not operated in a state in which the motor 40 is driven and the ball valve 10 blocks the flow of refrigerant, when trying to return the ball valve 10 to its original position (a position where refrigerant flow is possible) in a state where the gears of the gear assembly are meshed with each other, there is a possibility that the teeth of the gears provided in the gear assembly may be damaged.

In order to solve this problem, a clutch unit may be provided in the valve actuator.

By the way, in the conventional valve actuator, as disclosed in US 2001/0035510 A1, the clutch unit is installed on the output shaft of the gear assembly.

Therefore, since the output shaft moves in two directions, a rotational direction and a vertical (Y-Y') direction, there is a problem in that sealing performance is deteriorated, and since the output shaft has to move in the vertical (Y-Y') direction there is a problem in that the size of the product increases.

In addition, since a large rigid return spring is required to return the output shaft, and the engagement between the gear teeth is directly disengaged, there is a problem in that gear teeth are adversely affected.

However, according to the structure of the clutch unit of the present disclosure, since the middle shaft (shaft of the power transmission gear) of the gear train, not the output shaft, is formed as the clutch shaft 131, the clutch shaft 131 can be operated with less force compared to the case where the output shaft is used as the clutch shaft.

In addition, since the first gear 133 and the second gear 135 may be coupled or disengaged according to the movement of the clutch shaft 131 in the vertical (Y-Y') direction, when the clutch shaft 131 is operated, coupling between gears is disengaged, not disengagement of coupling between gear teeth.

Therefore, when the clutch shaft 131 moves in the vertical (Y-Y') direction, the influence on the teeth of the input gear 110, the output gear 130, and the power transmission gears 130 and 140 can be minimized.

A coupling part 133a for coupling the first gear 133 to the second gear 135 protrudes from the lower surface of the first gear 133 coupled to the input gear 110.

In addition, a coupling part insertion groove 135a into which the coupling part 133a of the first gear 133 is inserted is formed on the upper surface of the second gear 135.

The coupling part 133a and the coupling part insertion groove 135a may be formed in shapes corresponding to each other.

Although the accompanying drawings show that the planar shape of the coupling part 133a and the coupling part insertion groove 135a is formed in a spline shape, the planar shape of the coupling part 133a and the coupling part insertion groove 135a may be formed in various shapes such as an ellipse or a polygon.

When the coupling part 133a of the first gear 133 is inserted into the coupling part insertion groove 135a of the second gear 135, the height or thickness of the first gear set 130 in the vertical (Y-Y') direction may be reduced.

Accordingly, since the size of the space formed by the middle plate 33 and the lower case 31 can be reduced, the size of the valve actuator can be reduced.

A push-up part 131a is formed on the clutch shaft 131 to push the first gear 133 upward in contact with the coupling part 133a of the first gear 133.

In addition, a push-up part insertion groove 133b is formed on the lower surface of the coupling part 133a of the first gear 133.

Therefore, the push-up part 131a of the clutch shaft 131 is inserted into the push-up part insertion groove 133b formed on the lower surface of the coupling part 133a of the first gear 133.

When the push-up part 131a of the clutch shaft 131 is inserted into the push-up part insertion groove 133b formed on the lower surface of the coupling part 133a of the first gear 133, the height or thickness of the first gear set 130 in the vertical (Y-Y') direction may be reduced.

Therefore, since the size of the space formed by the middle plate 33 and the lower case 31 can be further reduced, the size of the valve actuator can be further reduced.

A return spring 137 is disposed on the clutch shaft 131 above the first gear 133.

Accordingly, the first gear 133 may be pressed toward the second gear 135 by the return spring 137.

According to this configuration, the first gear 133 and the second gear 135 are kept coupled with each other between the gears before the valve actuator operates.

That is, before the operation of the valve actuator, since the coupling part 133a of the first gear 133 is coupled to the coupling part insertion groove 135a of the second gear 135, the first gear 133 and the second gear 135 are kept coupled with each other between the gears.

In addition, after the operation of the valve actuator when the clutch shaft 131 is pressed from the bottom to the top to return the ball valve to its original position, while the return spring 137 is pressed, the first gear 133 is pushed up by the push-up part 131a, and accordingly, the coupling between the first gear 133 and the second gear 135 is disengaged.

In this state, when pressing of the clutch shaft 131 is disengaged while rotating the output shaft 121 by inserting a tool such as a screwdriver into a groove formed at the upper end of the output shaft 121, the first gear 133 is pressed downward by the return spring 137.

Therefore, while the output shaft 121 of the output gear 120 rotates and the coupling part 133a of the first gear 133 is inserted into the coupling part insertion groove 135a of the second gear 135, the first gear 133 and the second gear 135 are coupled again.

A snap ring 139 is installed on the clutch shaft 131 between the return spring 137 and the upper surface of the first gear 133.

The snap ring 139 is provided on the clutch shaft 131 to allow the clutch shaft 131 to be manually pulled in case the clutch shaft 131 does not return to the original position due to the malfunction of the return spring 137.

Therefore, when the first gear 133 does not move downward due to the malfunction of the return spring 137 despite the disengagement of the pressing of the clutch shaft 131, when the clutch shaft 131 is pulled downward, the snap ring 139 moves downward together with the clutch shaft 131, so that the coupling part 133a of the first gear 133 is coupled to the coupling part insertion groove 135a of the second gear 135.

A third seal ring R3 is disposed on the clutch shaft below the second gear 135.

In the lower case 31 where the clutch shaft 131 is coupled when the clutch shaft 131 moves in the vertical (Y-Y') direction, a guide groove 31a is formed to guide the third seal ring R3 to move in the vertical (Y-Y') direction together with the clutch shaft 131, the guide groove 31a is formed extending to the inner surface of the lower case 31.

Therefore, the moving distance of the clutch shaft 131 in the upward direction is set by a distance D3 between the third seal ring R3 and the second gear 135.

In this way, by appropriately setting the distance D3 between the third seal ring R3 and the second gear 135, the moving distance of the clutch shaft 131 in the upward direction can be adjusted.

In the state where the coupling between the gears of the first gear 133 and the second gear 135 is disengaged, the second gear 135 may be supported by the third seal ring R3 and/or the lower case 31.

Therefore, in the state where the coupling between the gears of the first gear 133 and the second gear 135 is disengaged, the downward movement of the second gear 135 may be limited by the third sea ring R3 and/or the lower case 31.

However, when the second gear 135 is spaced apart from the inner surface of the lower case 31 by a certain distance, it is also possible to further form a separate support shaft for supporting the second gear 135 outside the clutch shaft 131.

In this case, in a state where the coupling between the gears of the first gear 133 and the second gear 135 is disengaged, the downward movement of the second gear 135 may be limited by a separate support shaft.

In addition, if a part of the second gear 135 is positioned below the motor 40 and a third gear 141, when disengaging the coupling between the gears of the first gear 133 and the second gear 135, the upward movement of the second gear 135 may be limited by the motor 40 and the second gear set 140.

The second gear set 140 is disposed adjacent to the first gear set 130 in the horizontal (X-X') direction.

The second gear set 140 is coupled to the first gear 133 and includes the third gear 141 in which a part of the second gear 135 is positioned at the lower portion.

In addition, the second gear set 140 is positioned above the third gear 141 and further includes a fourth gear 143 that rotates integrally with the third gear 141 and is coupled to the output gear 120.

The third gear 141 and the fourth gear 143 constituting the second gear set 140 may be formed as one body, or may be manufactured separately and coupled between gears with a structure similar to that of the first and second gears 133 and 135.

According to this configuration, since the power transmission gear is composed of the first gear set 130 and the second gear set 140, the configuration of the gear assembly 100 can be simplified.

The lower end of the output shaft 121 coupled with the output gear 120 is coupled to the stem 16 of the ball valve 10, and the upper end of the output shaft 121 protrudes out of the upper case 32.

In addition, a fourth seal ring R4 is disposed between the output shaft 121 and the lower case 31 between the lower end of the output shaft 121 and the output gear 120.

According to this configuration, it is possible to prevent the refrigerant flowing along the ball valve 10 from entering the inside of the valve actuator through a minute gap formed between the output shaft 121 and the lower case 31.

A fifth seal ring R5 is disposed between the output shaft 121 and the upper case between the upper end of the output shaft 121 and the output gear 120.

According to this configuration, it is possible to prevent moisture from entering the inside of the housing 30 through a minute gap formed between the upper case 32 and the output shaft 121.

In the upper case 32, a cap R6 covering the upper end of the output shaft 121 protruding out of the upper case 32 is installed.

In addition, the cap R6 covers the minute gap between the output shaft 121 and the upper cover 32.

According to this configuration, it is possible to more effectively prevent moisture from entering the inside of the housing 30 through the minute gap formed between the upper case 32 and the output shaft 121.

In the above, the valve actuator for controlling the ball valve provided in the air conditioning system has been described, but the valve actuator of the present disclosure can be applied to other valves for controlling a flow path of gas or fluid.

The present disclosure has been described with reference to the embodiments shown in the drawings, but these are only exemplary, those skilled in the art will understand that various modifications and equivalent other embodiments are possible therefrom. Therefore, the true technical protection scope of the present disclosure should be determined by the claims below.

## Claims

1. A valve actuator comprising:
a housing (30);
a motor (40) disposed in an inner space of the housing (30); and
a gear assembly (100) disposed in the inner space of the housing (30) and transmitting a driving force of the motor (40) to a ball valve (10),
wherein the gear assembly (100) includes:
an input gear (110) coupled to a rotation shaft of the motor (40) and rotating together with the rotation shaft;
an output gear (120) positioned apart from the input gear (110) in a horizontal direction, coupled to a stem (16) of the ball valve (10), and transmitting a rotational force of the input gear (110) to the stem (16); and
a power transmission gear (130, 140) transmitting the rotational force of the input gear (110) to the output gear (120),
wherein the power transmission gear (130, 140) includes a first gear set (130) positioned between the input gear (110) and the output gear (120),
wherein the first gear set (130) includes:
a clutch shaft (131) installed in the housing (30) so as to be movable in a vertical direction; and
a first gear (133) and a second gear (135) coupled to the clutch shaft (131) and disengaged from each other or coupled to each other by vertical movement of the clutch shaft (131),
**characterized in that** a coupling part (133a) for coupling the first gear (133) to the second gear (135) is protruded from a lower surface of the first gear (133) coupled to the input gear (110), and a coupling part insertion groove (135a) into which the coupling part (133a) of the first gear (133) is inserted is formed on an upper surface of the second gear (135), and
wherein a push-up part (131a) is formed on the clutch shaft (131) to push the first gear (133) upward in contact with the coupling part (133a) of the first gear (133), and the push-up part (131a) is positioned in a push-up part insertion groove (133b) formed on a lower surface of the coupling part (133a) of the first gear (133).

2. The valve actuator of claim 1, wherein the housing (30) includes:
a lower case (31);
an upper case (32) coupled to the lower case (31); and
a middle plate (33) positioned in the inner space formed by the lower case (31) and the upper case (32),
wherein the motor (40) and the gear assembly (100) are positioned in a space formed by the middle plate (33) and the lower case (31), and
wherein the first gear (133) is pressed toward the second gear (135) by a return spring (137) disposed between the first gear (133) and the middle plate (33).

3. The valve actuator of claim 2, wherein a snap ring (139) is installed on the clutch shaft (131) between the return spring (137) and an upper surface of the first gear (133).

4. The valve actuator of claim 3, wherein a seal ring (R3) is disposed on the clutch shaft (131) below the second gear (135), and a guide groove (31a) is formed in the lower case (31) where the clutch shaft (131) is coupled and allow the seal ring (R3) to move in the vertical direction together with the clutch shaft (131) when the clutch shaft (131) moves in the vertical direction.

5. The valve actuator of claim 4, wherein a movement distance of the clutch shaft (131) in an upward direction is set by a gap between the seal ring (R3) and the second gear (135).

6. The valve actuator according to any one of claims 1 to 5, wherein the power transmission gear (130, 140) further includes a second gear set (140) disposed adjacent to the first gear set (130) in the horizontal direction, and
wherein the second gear set (140) includes:
a third gear (141) coupled to the first gear (133); and
a fourth gear (143) positioned above the third gear (141), integrally rotating with the third gear (141), and coupled with the output gear (120),
wherein when the clutch shaft (131) moves upward, an upward movement of the second gear (135) is inhibited by the motor (40) and the third gear (141).

## Patentansprüche

1. Ventilaktuator, umfassend:
ein Gehäuse (30);
einen Motor (40), der in einem Innenraum des Gehäuses (30) angeordnet ist; und
eine Getriebeanordnung (100), die in dem Innenraum des Gehäuses (30) angeordnet ist und eine Antriebskraft des Motors (40) auf ein Kugelventil (10) überträgt,
wobei die Getriebeanordnung (100) umfasst:
ein Eingangszahnrad (110), das mit einer Drehwelle des Motors (40) gekoppelt ist und sich zusammen mit der Drehwelle dreht;
ein Ausgangszahnrad (120), das in horizontaler Richtung vom Eingangszahnrad (110) entfernt angeordnet ist, mit einem Schaft (16) des Kugelventils (10) gekoppelt ist und eine Drehkraft des Eingangszahnrads (110) auf den Schaft (16) überträgt; und
ein Kraftübertragungszahnrad (130, 140), das die Drehkraft des Eingangszahnrads (110) auf das Ausgangszahnrad (120) überträgt,
wobei das Kraftübertragungszahnrad (130, 140) einen ersten Zahnradsatz (130) umfasst, der zwischen dem Eingangszahnrad (110) und dem Ausgangszahnrad (120) angeordnet ist,
wobei der erste Zahnradsatz (130) umfasst:
eine Kupplungswelle (131), die in dem Gehäuse (30) so installiert ist, dass sie in einer vertikalen Richtung beweglich ist; und
ein erstes Zahnrad (133) und ein zweites Zahnrad (135), die mit der Kupplungswelle (131) gekoppelt sind und durch vertikale Bewegung der Kupplungswelle (131) voneinander getrennt bzw. miteinander gekoppelt werden,
**dadurch gekennzeichnet, dass**
ein Kopplungsteil (133a) zum Koppeln des ersten Zahnrads (133) mit dem zweiten Zahnrad (135) von einer unteren Fläche des mit dem Eingangszahnrad (110) gekoppelten ersten Zahnrads (133) hervorsteht, und eine Kopplungsteil-Einsetznut (135a), in die das Kopplungsteil (133a) des ersten Zahnrads (133) eingesetzt ist, an einer oberen Fläche des zweiten Zahnrads (135) ausgebildet ist, und
wobei ein Hochdrückteil (131a) an der Kupplungswelle (131) ausgebildet ist, um das erste Zahnrad (133) in Kontakt mit dem Kopplungsteil (133a) des ersten Zahnrads (133) nach oben zu drücken, und das Hochdrückteil (131a) in einer Hochdrückteil-Einsetznut (133b) angeordnet ist, die an einer unteren Fläche des Kopplungsteils (133a) des ersten Zahnrads (133) ausgebildet ist.

2. Ventilaktuator nach Anspruch 1, wobei das Gehäuse (30) umfasst:
ein unteres Gehäuseteil (31);
ein oberes Gehäuseteil (32), das mit dem unteren Gehäuseteil (31) gekoppelt ist; und
eine Mittelplatte (33), die in dem von dem unteren Gehäuseteil (31) und dem oberen Gehäuseteil (32) gebildeten Innenraum angeordnet ist,
wobei der Motor (40) und die Getriebeanordnung (100) in einem von der Mittelplatte (33) und dem unteren Gehäuseteil (31) gebildeten Raum angeordnet sind, und
wobei das erste Zahnrad (133) durch eine Rückstellfeder (137), die zwischen dem ersten Zahnrad (133) und der Mittelplatte (33) angeordnet ist, zum zweiten Zahnrad (135) gedrückt wird.

3. Ventilaktuator nach Anspruch 2, wobei an der Kupplungswelle (131) zwischen der Rückstellfeder (137) und einer oberen Fläche des ersten Zahnrads (133) ein Sprengring (139) angebracht ist.

4. Ventilaktuator nach Anspruch 3, wobei ein Dichtungsring (R3) an der Kupplungswelle (131) unterhalb des zweiten Zahnrads (135) angeordnet ist und eine Führungsnut (31a) im unteren Gehäuseteil (31), wo die Kupplungswelle (131) angekoppelt ist, ausgebildet ist und es dem Dichtungsring (R3) ermöglicht, sich zusammen mit der Kupplungswelle (131) in der vertikalen Richtung zu bewegen, wenn sich die Kupplungswelle (131) in der vertikalen Richtung bewegt.

5. Ventilaktuator nach Anspruch 4, wobei ein Bewegungsabstand der Kupplungswelle (131) in einer Aufwärtsrichtung durch einen Spalt zwischen dem Dichtungsring (R3) und dem zweiten Zahnrad (135) festgelegt ist.

6. Ventilaktuator nach einem der Ansprüche 1 bis 5, wobei das Kraftübertragungszahnrad (130, 140) ferner einen zweiten Zahnradsatz (140) aufweist, der in horizontaler Richtung angrenzend an den ersten Zahnradsatz (130) angeordnet ist, und
wobei der zweite Zahnradsatz (140) umfasst:
ein drittes Zahnrad (141), das mit dem ersten Zahnrad (133) gekoppelt ist; und
ein viertes Zahnrad (143), das oberhalb des dritten Zahnrads (141) angeordnet ist, sich integral mit dem dritten Zahnrad (141) dreht und mit dem Ausgangszahnrad (120) gekoppelt ist,
wobei dann, wenn sich die Kupplungswelle (131) nach oben bewegt, eine Aufwärtsbewegung des zweiten Zahnrads (135) durch den Motor (40) und das dritte Zahnrad (141) unterbunden wird.

## Revendications

1. Actionneur de soupape comprenant :
un boîtier (30) ;
un moteur (40) disposé dans un espace intérieur du boîtier (30) ; et
un ensemble d'engrenages (100) disposé dans l'espace intérieur du boîtier (30) et transmettant une force d'entraînement du moteur (40) à une soupape à boisseau sphérique (10),
dans lequel l'ensemble d'engrenages (100) comporte :
un engrenage d'entrée (110) couplé à un arbre de rotation du moteur (40) et tournant conjointement avec l'arbre de rotation ;
un engrenage de sortie (120) positionné à l'écart de l'engrenage d'entrée (110) dans une direction horizontale, couplé à une tige (16) de la soupape à boisseau sphérique (10), et transmettant une force de rotation de l'engrenage d'entrée (110) à la tige (16) ; et
un engrenage de transmission de puissance (130, 140) transmettant la force de rotation de l'engrenage d'entrée (110) à l'engrenage de sortie (120),
dans lequel l'engrenage de transmission de puissance (130, 140) comprend un premier ensemble d'engrenages (130) positionné entre l'engrenage d'entrée (110) et l'engrenage de sortie (120),
dans lequel le premier ensemble d'engrenages (130) comporte :
un arbre d'embrayage (131) installé dans le boîtier (30) de manière à pouvoir être déplacé dans une direction verticale ; et
un premier engrenage (133) et un deuxième engrenage (135) couplés à l'arbre d'embrayage (131) et désengagés l'un de l'autre ou couplés l'un à l'autre par un mouvement vertical de l'arbre d'embrayage (131),
**caractérisé en ce que**
une pièce d'accouplement (133a) destinée à coupler le premier engrenage (133) au deuxième engrenage (135) fait saillie d'une surface inférieure du premier engrenage (133) couplé à l'engrenage d'entrée (110), et une rainure d'insertion de pièce d'accouplement (135a), dans laquelle la pièce d'accouplement (133a) du premier engrenage (133) est insérée, est formée sur une surface supérieure du deuxième engrenage (135), et
dans lequel une pièce de poussée vers le haut (131a) est formée sur l'arbre d'embrayage (131) pour pousser le premier engrenage (133) vers le haut en contact avec la pièce d'accouplement (133a) du premier engrenage (133), et la pièce de poussée vers le haut (131a) est positionnée dans une rainure d'insertion de pièce de poussée vers le haut (133b) formée sur une surface inférieure de la pièce d'accouplement (133a) du premier engrenage (133).

2. Actionneur de soupape selon la revendication 1, dans lequel le boîtier (30) comporte :
un boîtier inférieur (31) ;
un boîtier supérieur (32) couplé au boîtier inférieur (31) ; et
une plaque centrale (33) positionnée dans l'espace intérieur formé par le boîtier inférieur (31) et le boîtier supérieur (32),
dans lequel le moteur (40) et l'ensemble d'engrenages (100) sont positionnés dans un espace formé par la plaque centrale (33) et le boîtier inférieur (31), et
dans lequel le premier engrenage (133) est pressé vers le deuxième engrenage (135) par un ressort de rappel (137) disposé entre le premier engrenage (133) et la plaque centrale (33).

3. Actionneur de soupape selon la revendication 2, dans lequel une bague élastique (139) est installée sur l'arbre d'embrayage (131) entre le ressort de rappel (137) et une surface supérieure du premier engrenage (133).

4. Actionneur de soupape selon la revendication 3, dans lequel une bague d'étanchéité (R3) est disposée sur l'arbre d'embrayage (131) sous le deuxième engrenage (135), et une rainure de guidage (31a) est formée dans le boîtier inférieur (31) où l'arbre d'embrayage (131) est couplé et permet à la bague d'étanchéité (R3) de se déplacer dans la direction verticale conjointement avec l'arbre d'embrayage (131) lorsque l'arbre d'embrayage (131) se déplace dans la direction verticale.

5. Actionneur de soupape selon la revendication 4, dans lequel une distance de mouvement de l'arbre d'embrayage (131) dans une direction vers le haut est définie par un espace entre la bague d'étanchéité (R3) et le deuxième engrenage (135).

6. Actionneur de soupape selon l'une quelconque des revendications 1 à 5, dans lequel l'engrenage de transmission de puissance (130, 140) comporte en outre un deuxième ensemble d'engrenages (140) disposé de manière adjacente au premier ensemble d'engrenages (130) dans la direction horizontale, et
dans lequel le deuxième ensemble d'engrenages (140) comporte :
un troisième engrenage (141) couplé au premier engrenage (133) ; et
un quatrième engrenage (143) positionné au-dessus du troisième engrenage (141), tournant d'un seul tenant avec le troisième engrenage (141), et couplé à l'engrenage de sortie (120),
dans lequel lorsque l'arbre d'embrayage (131) se déplace vers le haut, un mouvement vers le haut du deuxième engrenage (135) est inhibé par le moteur (40) et le troisième engrenage (141).
